# FASCICULE DE BREVET EUROPEEN

(11) **EP 2 563 654 B1**
(45) Date de publication et mention de la délivrance du brevet: **22.06.2016**
(21) Numéro de dépôt: 11731437.7
(22) Date de dépôt: 20.04.2011
(51) Int. Cl.: B64C 11/44

(54) **ACTIONNEMENT DES PALES D'UNE SOUFFLANTE NON CARENEE**
BETÄTIGUNG DER FLÜGEL EINES NICHT STROMLINIENFÖRMIGEN LUFTGEBLÄSES
ACTUATION OF THE BLADES OF AN UNSTREAMLINED AIR BLOWER

(30) Priorité: 30.04.2010 FR 1053350
(43) Date de publication de la demande: 06.03.2013
(73) Titulaire: Labinal Power Systems, 31700 Blagnac (FR)
(72) Inventeur: DE WERGIFOSSE, Eric, F-77515 Saint Augustin (FR)
(74) Mandataire: David, Alain
(86) Numéro de dépôt international: PCT/FR2011/050917
(87) Numéro de publication internationale: WO 2011/135236

(56) Documents cités:
- FR-A1- 2 913 935
- GB-A- 577 870
- GB-A- 799 899
- US-A- 2 974 730
- US-A1- 2008 308 685

## Description

### Arrière-plan de l'invention

L'invention se rapporte au domaine des moteurs de propulsion dans lesquels le rotor présente des éléments orientables.

Un type de moteur de propulsion connu, utilisé notamment en aéronautique, est appelé « Open rotor » ou « Soufflante non-carénée ».

Dans ce type de moteur, le rotor porte une pluralité de pales dont l'orientation par rapport au rotor peut varier. Ainsi, un (ou plusieurs) actionneur est prévu pour modifier l'orientation des pales. Selon l'orientation qu'il faut donner aux pales et les contraintes aérodynamiques exercées sur les pales, l'actionneur peut agir soit comme moteur soit comme un frein.

L'actionneur est par exemple un actionneur électrique. Dans ce cas, il est nécessaire de lui fournir de la puissance électrique lorsqu'il fonctionne comme moteur, et de récupérer la puissance électrique qu'il fournit lorsqu'il fonctionne comme un frein.

Pour cela, il est connu d'utiliser un circuit d'alimentation reliant une source électrique à l'actionneur. Le circuit d'alimentation comprend un bus d'alimentation en courant continu et un redresseur / onduleur reliant le bus à l'actionneur. Lorsque l'actionneur fonctionne en moteur, le bus transmet la puissance provenant de la source vers le redresseur /onduleur qui fonctionne en onduleur et alimente l'actionneur en tension alternative. Lorsque l'actionneur fonctionne comme un frein, la tension alternative fournie par l'actionneur est redressée par le redresseur / onduleur et dissipée dans une résistance de dissipation pendue sur le bus d'alimentation.

Cette solution présente plusieurs inconvénients.

D'une part, la source électrique doit être dimensionnée pour pouvoir fournir la puissance nécessaire à l'actionneur lors d'un mouvement moteur de forte amplitude. Typiquement, la source doit par exemple fournir une puissance de crête de 3300 W. Cette puissance est nettement supérieure à la puissance nécessaire à l'actionneur pour effectuer des petits mouvements de positionnement de façon continue, qui est typiquement de l'ordre de 500 W. Cette puissance élevée doit être transmise du stator vers le rotor, ce qui impose des contraintes de conception.

De plus, vu le caractère peu dissipatif du mouvement des pales et le bon rendement de l'actionneur, la majeure partie de la puissance fournie par la source lors du fonctionnement moteur doit être dissipée dans la résistance de dissipation lors du fonctionnement en frein. Typiquement, pour les valeurs ci-dessus, la résistance doit dissiper une puissance de 2800 W en crête et de 300 W en continu.

Enfin, on sait que les règles de certification des moteurs de propulsion imposent que tout système électrique qui impacte la poussée doit être redondé. Ainsi, la source, le bus d'alimentation, la résistance de dissipation et le redresseur / onduleur doivent être redondés. Il est donc nécessaire de prévoir deux résistances de dissipation, alors que les contraintes d'installation peuvent mener à des volumes utilisables relativement faibles impactant également la taille des échangeurs et/ou des dissipateurs thermiques.

Le document US 2008/0308685 décrit une aile volante à énergie solaire comprenant des propulseurs à pales orientables. Cependant, ce document ne décrit pas en détail les moteurs chargés de commander les propulseurs. En particulier, ce document ne décrit pas d'actionneur électrique porté par un rotor des propulseurs. De plus, les volants à inertie décrits dans ce document sont situés dans la structure de l'aile volante. Ainsi, ce document n'offre pas de solution au problème de la puissance de crête élevée qu'il est nécessaire de transmettre du stator vers le rotor pour alimenter un actionneur électrique de pale orientable porté par le rotor.

Il existe donc aujourd'hui un besoin pour une solution permettant d'actionner plus efficacement un organe orientable du rotor d'un moteur de propulsion.

### Objet et résumé de l'invention

A cet effet, l'invention concerne un moteur de propulsion comprenant un rotor portant au moins une pale orientable et un dispositif d'actionnement relié à ladite pale, ledit dispositif d'actionnement, comprenant : au moins une source électrique apte à transférer de l'énergie électrique d'un repère fixe vers le rotor, un actionneur électrique porté par le rotor et destiné à orienter ladite pale, et - un circuit d'alimentation porté par le rotor et reliant ladite source électrique audit actionneur, caractérisé en ce que le dispositif d'actionnement comprend en outre un dispositif à inertie porté par le rotor et relié audit circuit d'alimentation, ledit dispositif à inertie étant apte à convertir de l'énergie électrique provenant dudit circuit d'alimentation en énergie mécanique, à stocker ladite énergie mécanique, et à convertir ladite énergie mécanique en énergie électrique à destination dudit circuit d'alimentation.

Grâce à ces caractéristiques, lorsque l'actionneur fonctionne comme moteur, au moins une partie de l'énergie peut être fournie par le dispositif à inertie. Ainsi, la source électrique ne doit pas être dimensionnée pour fournir la puissance maximale que peut nécessiter l'actionneur. De plus, lorsque l'actionneur fonctionne comme un frein, au moins une partie de l'énergie qu'il fournit peut être stockée par le dispositif à inertie. Ainsi, la dissipation d'énergie peut être limitée. Il n'est pas nécessaire de prévoir une résistance de dissipation.

Le dispositif d'actionnement peut comprendre en outre une deuxième source électrique et un deuxième circuit d'alimentation, ledit dispositif à inertie étant relié audit deuxième circuit d'alimentation, ledit dispositif à inertie étant apte à convertir de l'énergie électrique provenant dudit deuxième circuit d'alimentation en énergie mécanique et à convertir ladite énergie mécanique en énergie électrique à destination dudit deuxième circuit d'alimentation. Cela permet une redondance du circuit d'alimentation, le dispositif à inertie étant commun aux deux circuits d'alimentation.

Selon un mode de réalisation, le circuit d'alimentation comprend :
- un bus d'alimentation en courant continu relié à la source électrique,
- un premier redresseur/onduleur relié d'une part au bus d'alimentation et d'autre part audit actionneur électrique,
- un deuxième redresseur/onduleur relié d'une part audit bus d'alimentation et d'autre part audit dispositif à inertie.

Dans ce cas, le dispositif d'actionnement peut comprendre un dispositif de commande apte à commander ledit dispositif à inertie en fonction d'une différence entre la tension fournie par la source électrique et la tension du bus d'alimentation.

Selon un mode de réalisation, le dispositif à inertie comprend un organe rotatif, le dispositif de commande étant apte à commander ledit dispositif à inertie en fonction d'une différence entre une vitesse de rotation dudit organe rotatif et une vitesse de consigne.

Le dispositif de commande peut être apte à déterminer une consigne de couple, ledit dispositif de commande incluant un limiteur de couple.

Le dispositif à inertie peut inclure un moteur électrique à rotor interne ou externe. Le moteur électrique peut présenter un volant d'inertie.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement un dispositif d'actionnement selon un mode de réalisation de l'invention, et
- la figure 2 représente une partie du dispositif d'actionnement de la figure 1.

### Description détaillée d'un mode de réalisation

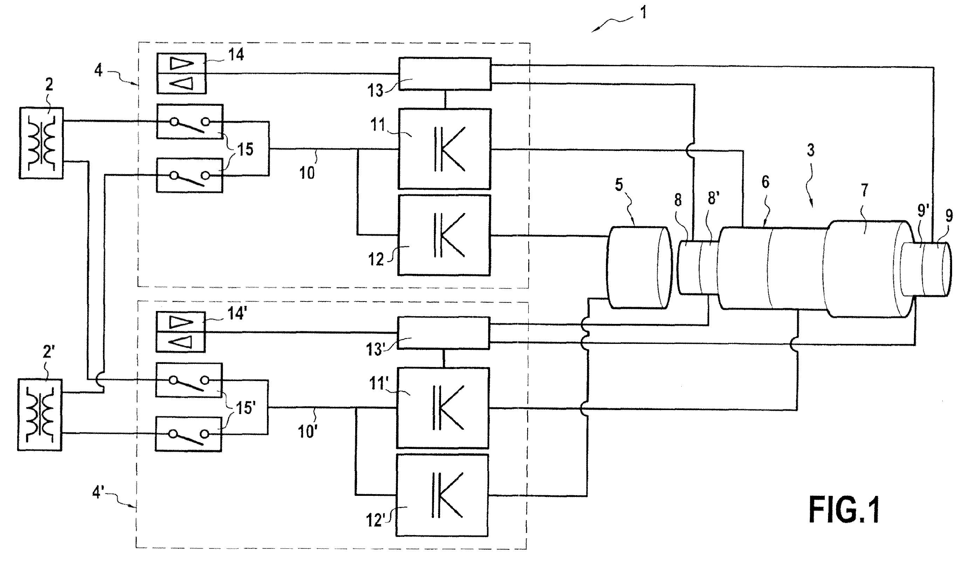

La figure 1 représente schématiquement un dispositif d'actionnement 1 selon un mode de réalisation de l'invention. Le dispositif d'actionnement 1 est destiné à orienter un organe orientable porté par le rotor d'un moteur de propulsion (non représenté). Par exemple, le dispositif d'actionnement permet d'orienter les pales d'un moteur de type « Open rotor » ou « Soufflante non-carénée ».

Le dispositif d'actionnement 1 comprend deux sources électriques 2, 2', un actionneur 3, deux circuits d'alimentations 4, 4' et un dispositif à inertie 5.

Chacune des sources électriques 2, 2' a pour rôle de fournir de l'énergie à chacun des circuits d'alimentations 4, 4'. Les sources électriques 2, 2' ont la particularité de devoir passer de l'énergie du repère fixe au repère tournant (le rotor du moteur de propulsion) dont la vitesse de rotation est par exemple de 900 tr/min. Cette contrainte implique un dimensionnement particulièrement sensible au niveau de puissance à transmettre. Cependant, comme on l'explique ci-dessous, le dispositif d'actionnement 1 ne nécessite pas une puissance particulièrement élevée. Ainsi, les sources électriques 2, 2' peuvent être dimensionnées pour une puissance limitée.

L'actionneur 3 comprend un moteur électrique 6, une transmission mécanique 7 et des capteurs 8, 8', 9 et 9'.

Le moteur électrique 6 est par exemple du type synchrone triphasé sans balai, à aimants permanents. Il peut fonctionner en générateur électrique lorsqu'il est entraîné mécaniquement. Les parties électriques du moteur électrique 6 sont redondées, ce qui est symbolisé sur la figure 1 par un trait séparant le moteur électrique en deux parties. Il peut s'agir soit d'une redondance complète du moteur (double rotor et double stator en enfilade) soit d'un moteur à double encoches statoriques.

La transmission mécanique 7 relie l'actionneur 3 à l'organe orientable du rotor du moteur de propulsion. Pour cela, la transmission mécanique 7 peut par exemple transformer soit un mouvement de rotation en un autre mouvement de rotation mais à une vitesse différente, soit un mouvement de rotation en un mouvement de translation.

Les capteurs 8, 8' mesurent une position angulaire de l'axe du moteur électrique 6. Ils sont reliés respectivement à un dispositif de commande 13, 13', ce qui permet de commander le moteur électrique 6. Les capteurs 9, 9' mesurent une position au niveau de la sortie de la transmission mécanique 7 (en rotation ou en translation). Ils sont également reliés respectivement à un des dispositifs de commande 13, 13', ce qui permet de réaliser un asservissement de position précis. Le fonctionnement des dispositifs de commande 13, 13' est décrit de manière plus détaillées ci-dessous. L'actionneur 3 peut également comprendre d'autres capteurs (non représentés), par exemple de température, pour effectuer une surveillance appropriée.

Le circuit d'alimentation 4 comprend un bus d'alimentation 10 en courant continu, un premier redresseur/onduleur 11, un deuxième redresseur/onduleur 12 et deux interfaces 15. De manière similaire, le circuit d'alimentation 4' comprend un bus d'alimentation 10' en courant continu, un premier redresseur/onduleur 11', un deuxième redresseur/onduleur 12' et deux interfaces 15'. Ci-dessous, on décrit de manière plus détaillée le circuit d'alimentation 4, le circuit d'alimentation 4' en étant une redondance.

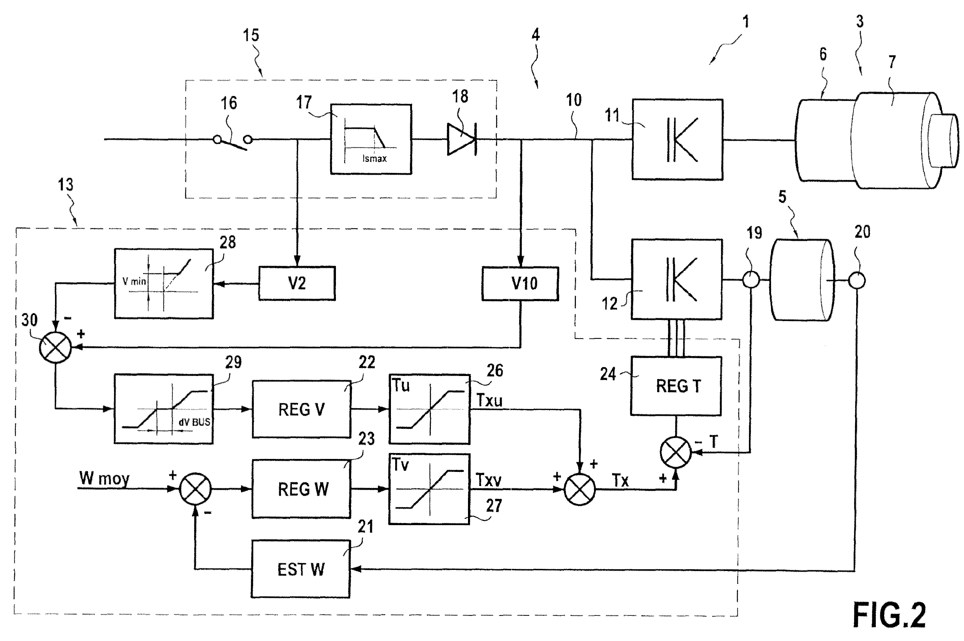

Comme le montre la figure 1, les interfaces 15 permettent de relier le bus d'alimentation 10 soit à la source électrique 2, soit à la source électrique 2'. Ainsi, en cas de défaillance d'une des sources électriques 2, 2' ou d'un des circuits d'alimentation 4, 4', le dispositif d'actionnement 1 peut rester opérationnel. Comme le montre de manière plus détaillée la figure 2, une interface 15 comprend un interrupteur 16, un limiteur de courant 17 et un élément unidirectionnel 18.

Le bus d'alimentation 10 relie les interfaces 15 au redresseur/onduleur 11 et au redresseur/onduleur 12.

Le redresseur/onduleur 11 est relié à l'actionneur 3. De manière connue, il est apte à fonctionner en onduleur, c'est-à-dire à transformer la tension continue du bus d'alimentation 10 en une tension triphasée pour alimenter l'actionneur 3, et, à fonctionner en redresseur, c'est-à-dire à transformer une tension triphasée fournie par l'actionneur 3 en la tension continue du bus d'alimentation 10. Le mode de fonctionnement dépend des rapports cycliques de commande.

Le redresseur/onduleur 12 est relié au dispositif à inertie 5. Il est apte à fonctionner en onduleur, c'est-à-dire à transformer la tension continue du bus d'alimentation 10 en une tension triphasée pour alimenter le dispositif à inertie 5. Il est également apte à fonctionner en redresseur, c'est-à-dire à transformer une tension triphasée fournie par le dispositif à inertie 5 en la tension continue du bus d'alimentation 10.

Le dispositif à inertie 5 comprend un organe rotatif, du type roue à inertie, capable de stocker de l'énergie cinétique. Ainsi, le dispositif à inertie 5 peut comprendre un moteur électrique synchrone sans balai. Par exemple, le dispositif à inertie 5 comprend un moteur électrique à rotor interne, incluant un volant d'inertie. En variante, le dispositif à inertie 5 comprend un moteur électrique à rotor externe. Dans ce cas, le rotor peut présenter une inertie suffisante et un volant d'inertie n'est pas nécessaire. De préférence, le moteur électrique du dispositif à inertie 5 est redondé, une partie étant reliée au redresseur/onduleur 12 et une autre partie étant reliée au redresseur/onduleur 12'.

Le dispositif à inertie 5 est de préférence positionné de manière coaxiale par rapport au centre de rotation du rotor, pour limiter les contraintes mécaniques liées à l'accélération centrifuge.

Comme expliqué ci-dessus, le dispositif d'actionnement 1 comprend également des dispositifs de commande 13, 13'. Plus précisément, le dispositif de commande 13 comprend une première partie qui est relié notamment aux capteurs 8 et 9, ainsi qu'aux circuits de contrôle du redresseur/onduleur 11et de l'actionneur 6 et une deuxième partie qui est reliée aux circuits de contrôle du redresseur/onduleur 12. La première partie du dispositif de commande permet donc de commander l'actionneur 6 et la deuxième partie permet de commander le dispositif à inertie 5. Le dispositif de commande 13, porté par le rotor du moteur de propulsion, est également relié à un circuit de transmission 14 permettant une communication avec la partie fixe. Le dispositif de commande 13' constitue la redondance du dispositif de commande 13. Ainsi, il comprend une première partie qui est relié notamment aux capteurs 8' et 9', aux circuits de contrôle du redresseur/onduleur 11', et de l'actionneur 6 et une deuxième partie qui est reliée aux circuits de contrôle du redresseur/onduleur 12'. Le dispositif de commande 13' est aussi relié à un circuit de transmission 14'.

Les dispositifs de commande 13 et 13' sont représentés de manière unitaire sur la figure 1. Toutefois, chaque partie des dispositifs de commande 13 et 13' peut être une entité distincte réalisée par exemple sous la forme de circuits numériques basées sur un principe de logique programmable (FPGA,...) ou sur un principe de processeur(s) incluant des programmes de contrôle.. En variante, les dispositifs de commande 13 peuvent être réalisés par exemple sous la forme de circuits intégrés spécifiques.

On décrit maintenant le fonctionnement du dispositif d'actionnement 1 en référence au circuit d'alimentation 4. Bien entendu, ce fonctionnement est redondé pour le circuit d'alimentation 4'.

Lorsque l'actionneur 3 doit fonctionner comme moteur pour un mouvement d'orientation des pales nécessitant de la puissance, le dispositif de commande 13 commande le redresseur/onduleur 11 pour fournir la tension alternative nécessaire. L'énergie provient, par l'intermédiaire du bus d'alimentation 10, de la source électrique 2 ou 2' et/ou du dispositif à inertie 5. En effet, en parallèle, le dispositif de commande 13 peut commander un ralentissement de l'organe rotatif du dispositif à inertie 5 et la conversion de la tension alternative générée en tension continue par le redresseur/onduleur 12.

Lorsque l'actionneur 3 doit fonctionner comme un frein pour un mouvement d'orientation des pales générant de la puissance, le dispositif de commande 13 commande le redresseur/onduleur 11 pour convertir la tension alternative fournie par l'actionneur 3 en tension continue. En parallèle, le dispositif de commande 13 commande le redresseur/onduleur 12 pour prélever la puissance fournie au bus d'alimentation 10 et la convertir en tension alternative afin d'accélérer l'organe rotatif du dispositif à inertie 5.

Ainsi, lors du fonctionnement de l'actionneur 3 en moteur, la puissance nécessaire n'est pas fournie entièrement par les sources électriques 2 ou 2', qui peuvent donc être dimensionnées de manière limitée. Par ailleurs, lors du fonctionnement de l'actionneur 3 comme un frein, la puissance générée ne doit pas être dissipée dans une résistance de dissipation. Au contraire, elle peut être convertie et stockée pour être réutilisée ultérieurement.

Les sources électriques 2 et 2' ne doivent donc fournir qu'une puissance moyenne correspondant aux pertes des circuits de contrôle et du dispositif à inertie 5. Typiquement, pour un exemple de dimensionnement, la puissance que doivent fournir les sources 2 et 2' peut être de 275W au lieu de 3300 W crête et 500 W continu pour les solutions de l'art antérieur.

De plus, la dissipation d'énergie correspond essentiellement à la consommation des circuits de contrôle et aux pertes de fonctionnement des redresseurs/onduleurs 11, 11', 12, 12'. Typiquement, la dissipation d'énergie est par exemple de 75W, à comparer avec 350W pour les solutions de l'art antérieur.

On décrit maintenant un exemple de dimensionnement du dispositif à inertie 5. On considère un actionnement des pales de forte amplitude qui requiert typiquement environ 1kJ. Si on choisit, pour la vitesse de rotation de l'organe rotatif du dispositif à inertie 5, une plage de fonctionnement entre 5000 et 7000 tr/min, une inertie en rotation de 0.010 kg*m² est donc suffisante. Une telle inertie peut être facilement obtenue avec un moteur électrique à rotor interne et à volant d'inertie ou un moteur électrique à rotor externe. Le couple produit pour cette plage de vitesse est limité à 7 à 8 Nm. Le fonctionnement à une vitesse réduite permet également de limiter les pertes magnétiques et les pertes par ventilation dans l'entrefer.

La figure 2 représente certains éléments de la figure 1. De plus, dans le dispositif de commande 13, on a représenté sous forme schématique un exemple de procédé de commande que peut mettre en oeuvre la deuxième partie du dispositif de commande 13, c'est-à-dire celle qui pilote le redresseur/onduleur 12 du dispositif à inertie 5. Cet exemple est décrit ci-dessous. La première partie du dispositif de commande 13 peut, elle, mettre en oeuvre de manière classique une boucle de couple pilotée par une boucle de vitesse, elle-même pilotée par une boucle de position.

En plus des capteurs mentionnés ci-dessus, le dispositif de commande 13 est relié à un capteur (non représenté) mesurant la tension V2 fournie par la source électrique 2 ou 2' et un capteur (non représenté) mesurant la tension V10 du bus d'alimentation 10. La tension V10 peut être différente de la tension V2 par exemple si la tension V10 baisse parce que le redresseur/onduleur 11 consomme un courant supérieur à la limite Ismax du limiteur de courant 17. Ainsi, la puissance maximale que peut fournir la source est V2*Ismax.

Le dispositif de commande 13 est également relié à un capteur 19 mesurant des courants dans le dispositif à inertie 5, ce qui permet de déterminer le couple T du dispositif à inertie 5, et à un capteur 20 mesurant la vitesse de rotation W du dispositif à inertie 5. En variante, à la place du capteur 20, le dispositif de commande 13 peut estimer la vitesse de rotation W grâce à un estimateur 21, apte à calculer la vitesse de rotation W en fonction de variables mémorisées par le dispositif de commande 13.

Le dispositif de commande 13 met en oeuvre un boucle de régulation utilisant notamment un régulateur de tension 22, un régulateur de vitesse 23 et un régulateur de couple ou de courant 24.

Le régulateur de vitesse 23 a pour entrée la différence entre une consigne de vitesse Wmoy et la vitesse de rotation W du dispositif à inertie 5, mesurée par le capteur 20 ou estimée par l'estimateur 21. La sortie du régulateur de vitesse 23 est une première consigne de couple Txv, limitée par le limiteur de couple 27 entre les valeurs -Tv et +Tv. Le seuil Tv est choisit de sorte que Wmoy * Tv < (V2*Ismax - pertes des circuits de contrôle). Ainsi, il sera toujours possible de fournir le couple maximum que peut demander le régulateur de vitesse 23 grâce à la puissance fournie par la source électrique 2 ou 2'.

L'entrée du régulateur de tension 22 dépend de la différence entre la tension V2 et la tension V10. Ainsi, le régulateur de tension 22 fournit une deuxième consigne de couple Txu, limitée par le limiteur de couple 26 entre les valeurs -Tu et + Tu. Cette consigne vise à réduire la différence entre les tensions V2 et V10 en imposant le sens et l'amplitude du transfert de puissance entre le bus d'alimentation 10 et le dispositif à inertie 5. Cette puissance est proche du produit entre la vitesse de rotation W et le couple T. La puissance maximale transférée est donc Wmax*Tu, où Wmax est la vitesse de rotation maximale du dispositif à inertie 5. Le régulateur de tension 22 est de préférence du type PI ou PID.

L'entrée du régulateur de tension 22 n'est pas nécessairement égale la différence entre la tension V2 et la tension V10.

En effet, un module 29 annule l'entrée du régulateur de tension 22 lorsque la différence entre les tensions V10 et V2 est inférieure à un seuil dVbus. Tant que la puissance demandée sur le bus d'alimentation 10 est inférieure à la puissance V2*Ismax, le limiteur de courant 17 n'agit pas et la tension V10 n'est que très légèrement inférieure à V2. Dans ce cas, le régulateur de tension 22 ne demande pas de couple. Le module 29 permet donc d'éviter de puiser de l'énergie dans le dispositif à inertie 5 alors que la source électrique 2 ou 2' est capable de fournir la puissance demandée au niveau du bus d'alimentation 10. Par contre, dès que le courant demandé sur le bus d'alimentation 10 dépasse Ismax, le limiteur de courant 17 commence à agir et la différence entre les tensions V2 et V10 dépasse dVbus. Dans ce cas, le régulateur de tension 22 demande un couple Txu au dispositif à inertie 5 visant à réduire cette différence.

De plus, un module 28 est placé en amont de l'élément 30 qui détermine la différence entre les tensions V2 et V10. Le module 28 fournit une tension constate Vmin lorsque la tension V2 est inférieure à Vmin, par exemple en cas de défaillance des sources électriques 2, 2'. Ainsi, dans ce cas, même si les tensions V2 et V10 sont nulles ou quasi nulles, l'entrée du régulateur de vitesse 22 sera égale à Vmin - dVbus, et le régulateur de vitesse 22 demandera un couple de freinage Txv ayant pour effet d'alimenter le bus d'alimentation 10 à partir du dispositif à inertie 5. Ainsi, tant que l'énergie stockée dans le dispositif à inertie 5 le permet, le bus d'alimentation 10 peut être alimenté.

Les consignes de couples Txv et Txu du régulateur de vitesse 23 et du régulateur de tension 22 sont additionnées pour déterminer une consigne de couple globale Tx. L'entrée du régulateur de couple 24 correspond à la différence entre la consigne de couple globale Tx et le couple T mesuré par le capteur 19. Le régulateur de couple 24 fonctionne dans deux quadrants, c'est-à-dire avec un seul sens de rotation et deux sens de couple.

La dynamique du régulateur de tension 22 est plus rapide que celle du régulateur de vitesse 23. De plus, la valeur Tu est largement supérieure à la valeur Tv. Ainsi, le régulateur de tension 22 est prioritaire par rapport au régulateur de vitesse 23. Autrement dit, le couple du dispositif à inertie 5 est principalement déterminé en fonction de la différence entre les tensions V2 et V10.

Le fonctionnement du dispositif d'actionnement 1, tel que commandé comme décrit ci-dessus par le dispositif de commande 13, est le suivant.

Dans les phases de fonctionnement de l'actionneur 3 à puissance nulle ou faiblement moteur, c'est-à-dire lorsque la puissance consommée par les éléments reliés au bus d'alimentation 10 est inférieure à V2*Ismax :
- si la vitesse de rotation W est égale à la vitesse de consigne Wmoy, le régulateur de tension 22 ne demande aucun couple car V10 - V2 < dVbus. La source électrique 2 ou 2' fournit entièrement l'énergie consommée. Les consommateurs d'énergie sont : les circuits de contrôles des redresseurs/onduleurs 11 et 12 et de l'actionneur 3, l'actionneur 3 et le dispositif à inertie 5 qui, sous l'effet du régulateur de vitesse 23, nécessite de la puissance pour maintenir la vitesse Wmoy (compensation des pertes issues par exemple des roulements, du frottement air, pertes magnétiques et par effet Joule).
- si la vitesse de rotation W est inférieure à la vitesse de consigne Wmoy, le régulateur de tension 22 ne demande aucun couple car V10 - V2 < dVbus. La source électrique 2 ou 2' fournit entièrement l'énergie consommée. Les consommateurs d'énergie sont : les circuits de contrôles des redresseurs/onduleurs 11 et 12 et de l'actionneur 3, l'actionneur 3 et le dispositif à inertie 5 qui, sous l'effet du régulateur de vitesse 23, nécessite de la puissance pour accélérer jusqu'à la vitesse Wmoy. Grâce au limiteur de couple 27, la puissance demandée pour accélérer sera inférieure ou égale à Wmoy*Tv. Le seuil Tv est choisit pour que cette puissance soit inférieure à la puissance disponible (V2*Ismax - pertes des circuits de contrôles).
- si la vitesse de rotation W est supérieure à la vitesse de consigne Wmoy, toute l'énergie est fournie par le dispositif à inertie 5. Le régulateur de vitesse 23 va imposer un couple de freinage Txv au dispositif à inertie 5 de valeur limitée à Tv. Ce couple de freinage va conduire à un transfert de puissance entre le dispositif à inertie 5 et le bus d'alimentation 10, d'une valeur proche de Txv*W. De ce fait, la tension V10 va avoir tendance à augmenter. Cette augmentation de tension aura deux effets : le premier sera de bloquer tout courant venant de la source électrique 2, 2' (élément unidirectionnel 18) et le second sera de solliciter le régulateur de tension 22 (V10 > V2). Le régulateur de tension 22 va vouloir imposer un couple Txu de sens opposé à celui du régulateur de vitesse de valeur Txv, de façon à limiter l'augmentation de la tension V10. L'équilibre se réalisera autour du point de fonctionnement (Txv-Txu)*W = puissance des consommateurs sur le bus d'alimentation 10. Les consommateurs d'énergie sont les circuits de contrôle et l'actionneur 3.

Dans les phases de fonctionnement de l'actionneur 3 à puissance moteur élevée, c'est-à-dire lorsque la puissance consommée par les éléments reliés au bus d'alimentation 10 est supérieure à V2*Ismax : Dans cette situation, en raison du courant appelé sur le bus d'alimentation 10, la tension V10 descend à une valeur V2-dVbus, ce qui a pour effet de solliciter le régulateur de tension 22 qui va demander un couple de freinage Txu au dispositif à inertie 5 de façon à recourir à l'énergie cinétique stockée. Le régulateur de vitesse 23 va lui vouloir maintenir la vitesse en tentant d'imposer un couple Txv opposé à celui du régulateur de tension 22. Cependant, le couple Txv sera plafonné à Tv, bien inférieur à Tu. L'équilibre se fera autour du point de fonctionnement (Txu - Tv)*W + V2*Ismax = Pertes des circuits de contrôles + Puissance consommée par l'actionneur 3.

Dans les phases de fonctionnement de l'actionneur 3 comme générateur, à puissance élevée, c'est-à-dire lorsque la puissance transmises de l'actionneur 6 vers le bus d'alimentation 10 est supérieure à la puissance consommée par les circuits de contrôles : Dans cette situation, en raison du courant fourni sur le bus d'alimentation 10, la tension V10 s'élève au dessus de V2, ce qui a pour effet bloquer toute puissance venant de la source électrique 2 ou 2' et de solliciter le régulateur de tension 22. Le régulateur de tension 22 va demander un couple d'accélération du dispositif à inertie 5 de façon à prélever l'excédent de puissance disponible sur le bus d'alimentation 10 et à stocker l'énergie sous forme d'énergie cinétique. Le régulateur de vitesse 23 va lui vouloir maintenir la vitesse en tentant d'imposer un couple Txv opposé à celui du régulateur de tension 22. Cependant, le couple Txv sera plafonné à Tv, bien inférieur à Tu. L'équilibre se fera autour du point de fonctionnement (Txu - Tv)*W + Pertes des circuits de contrôle = Puissance fournie par l'actionneur 3.

Bien entendu, en variante, d'autres procédés peuvent être utilisés pour commander le dispositif à inertie 5 afin de convertir de l'énergie électrique provenant du circuit d'alimentation en énergie mécanique, de stocker l'énergie mécanique, et de convertir l'énergie mécanique en énergie électrique à destination du circuit d'alimentation, en fonction du fonctionnement de l'actionneur 3.

## Revendications

1. Moteur de propulsion comprenant un rotor portant au moins une pale orientable et un dispositif d'actionnement (1) relié à ladite pale, ledit dispositif d'actionnement (1), comprenant :
- au moins une source électrique (2, 2') apte à transférer de l'énergie électrique d'un repère fixe vers le rotor,
- un actionneur (3) électrique porté par le rotor et destiné à orienter ladite pale, et
- un circuit d'alimentation (4, 4') porté par le rotor et reliant ladite source électrique (2, 2') audit actionneur (3),
**caractérisé en ce que** le dispositif d'actionnement comprend en outre un dispositif à inertie (5) porté par le rotor et relié audit circuit d'alimentation (4, 4'), ledit dispositif à inertie (5) étant apte à convertir de l'énergie électrique provenant dudit circuit d'alimentation (4, 4') en énergie mécanique, à stocker ladite énergie mécanique, et à convertir ladite énergie mécanique en énergie électrique à destination dudit circuit d'alimentation (4, 4').

2. Moteur de propulsion selon la revendication 1, dans lequel le dispositif d'actionnement comprend en outre une deuxième source électrique (2, 2') et un deuxième circuit d'alimentation (4, 4'), ledit dispositif à inertie (5) étant relié audit deuxième circuit d'alimentation (4, 4'), ledit dispositif à inertie (5) étant apte à convertir de l'énergie électrique provenant dudit deuxième circuit d'alimentation (4, 4') en énergie mécanique et à convertir ladite énergie mécanique en énergie électrique à destination dudit deuxième circuit d'alimentation (4, 4').

3. Moteur de propulsion selon l'une des revendications 1 et 2, dans lequel ledit circuit d'alimentation (4, 4') comprend :
- un bus d'alimentation (10, 10') en courant continu relié à ladite source électrique,
- un premier redresseur/onduleur (11, 11') relié d'une part audit bus d'alimentation (10, 10') et d'autre part audit actionneur (3) électrique,
- un deuxième redresseur/onduleur (12, 12') relié d'une part audit bus d'alimentation (10, 10') et d'autre part audit dispositif à inertie (5).

4. Moteur de propulsion selon la revendication 3, dans lequel le dispositif d'actionnement comprend en outre un dispositif de commande (13, 13') apte à commander ledit dispositif à inertie (5) en fonction d'une différence entre la tension fournie par la source électrique (V2) et la tension du bus d'alimentation (V10).

5. Moteur de propulsion selon la revendication 4, dans lequel ledit dispositif à inertie (5) comprend un organe rotatif, ledit dispositif de commande étant apte à commander ledit dispositif à inertie en fonction d'une différence entre une vitesse de rotation (W) dudit organe rotatif et une vitesse de consigne (W moy).

6. Moteur de propulsion selon l'une des revendications 4 et 5, dans lequel ledit dispositif de commande (13, 13') est apte à déterminer une consigne de couple (T), ledit dispositif de commande incluant un limiteur de couple (26, 27).

7. Moteur de propulsion selon l'une des revendications 1 à 6, dans lequel ledit dispositif à inertie (5) inclut un moteur électrique à rotor interne.

8. Moteur de propulsion selon l'une des revendications 1 à 6, dans lequel ledit dispositif à inertie (5) inclut un moteur électrique à rotor externe.

9. Moteur de propulsion selon l'une des revendications 7 et 8, dans lequel le moteur électrique inclut un volant d'inertie.

## Patentansprüche

1. Antriebsmotor, umfassend einen wenigstens ein einstellbares Blatt tragenden Rotor und eine Betätigungsvorrichtung (1), die mit dem Blatt verbunden ist, wobei die Betätigungsvorrichtung (1) umfasst:
- wenigstens eine Stromquelle (2, 2'), die geeignet ist, elektrische Energie von einem Festpunkt zu dem Rotor zu übertragen,
- ein elektrisches Stellglied (3), das von dem Rotor getragen und dazu bestimmt ist, das Blatt einzustellen, und
- einen Versorgungskreis (4, 4'), der von dem Rotor getragen ist und die Stromquelle (2, 2') mit dem Stellglied (3) verbindet,
**dadurch gekennzeichnet, dass** die Betätigungsvorrichtung ferner eine Trägheitsvorrichtung (5), die von dem Rotor getragen und mit dem Versorgungskreis (4, 4') verbunden ist, umfasst, wobei die Trägheitsvorrichtung (5) geeignet ist, von dem Versorgungskreis (4, 4') stammende elektrische Energie in mechanische Energie umzuwandeln, die mechanische Energie zu speichern und die mechanische Energie in für den Versorgungskreis (4, 4') bestimmte elektrische Energie umzuwandeln.

2. Antriebsmotor nach Anspruch 1, wobei die Betätigungsvorrichtung ferner eine zweite Stromquelle (2, 2') und einen zweiten Versorgungskreis (4, 4') umfasst, wobei die Trägheitsvorrichtung (5) mit dem zweiten Versorgungskreis (4, 4') verbunden ist, wobei die Trägheitsvorrichtung (5) geeignet ist, von dem zweiten Versorgungskreis (4, 4') stammende elektrische Energie in mechanische Energie umzuwandeln und die mechanische Energie in für den zweiten Versorgungskreis (4, 4') bestimmte elektrische Energie umzuwandeln.

3. Antriebsmotor nach einem der Ansprüche 1 und 2, wobei der Versorgungskreis (4, 4') umfasst:
- einen Bus zur Versorgung (10, 10') mit Gleichstrom, der mit der Stromquelle verbunden ist,
- einen ersten Gleichrichter/Wechselrichter (11, 11'), der einerseits mit dem Versorgungsbus (10, 10') und andererseits mit dem elektrischen Stellglied (3) verbunden ist,
- einen zweiten Gleichrichter/Wechselrichter (12, 12'), der einerseits mit dem Versorgungsbus (10, 10') und andererseits mit der Trägheitsvorrichtung (5) verbunden ist.

4. Antriebsmotor nach Anspruch 3, wobei die Betätigungsvorrichtung ferner eine Steuervorrichtung (13, 13') umfasst, die geeignet ist, die Trägheitsvorrichtung (5) in Abhängigkeit von einer Differenz zwischen der durch die Stromquelle gelieferten Spannung (V2) und der Spannung des Versorgungsbusses (V10) zu steuern.

5. Antriebsmotor nach Anspruch 4, wobei die Trägheitsvorrichtung (5) ein umlaufendes Organ umfasst, wobei die Steuervorrichtung geeignet ist, die Trägheitsvorrichtung in Abhängigkeit von einer Differenz zwischen einer Rotationsgeschwindigkeit (W) des umlaufenden Organs und einer Sollgeschwindigkeit (W moy) zu steuern.

6. Antriebsmotor nach einem der Ansprüche 4 und 5, wobei die Steuervorrichtung (13, 13') geeignet ist, einen Drehmomentsollwert (T) zu bestimmen, wobei die Steuervorrichtung einen Drehmomentbegrenzer (26, 27) enthält.

7. Antriebsmotor nach einem der Ansprüche 1 bis 6, wobei die Trägheitsvorrichtung (5) einen Elektromotor mit Innenrotor enthält.

8. Antriebsmotor nach einem der Ansprüche 1 bis 6, wobei die Trägheitsvorrichtung (5) einen Elektromotor mit Außenrotor enthält.

9. Antriebsmotor nach einem der Ansprüche 7 und 8, wobei der Elektromotor ein Schwungrad umfasst.

## Claims

1. A propulsion engine having a rotor carrying at least one swivel-mounted blade and an actuator device (1) connected to said blade, said actuator device (1) comprising:
· at least one electricity source (2, 2') suitable for transferring electrical energy from a stationary frame of reference to the rotor;
· an electric actuator (3) carried by the rotor in order to steer said blade; and
· a power supply circuit (4, 4') carried by the rotor and connecting said electricity source (2, 2') to said actuator (3);
the engine being **characterized in that** the actuator device further comprises an inertial device (5) carried by the rotor and connected to said power supply circuit (4, 4'), said inertial device (5) being suitable for converting electrical energy coming from said power supply circuit (4, 4') into mechanical energy, for storing said mechanical energy, and for converting said mechanical energy into electrical energy for said power supply circuit (4, 4').

2. An engine according to claim 1, wherein the actuator device further comprises a second electricity source (2, 2') and a second power supply circuit (4, 4'), said inertial device (5) being connected to said second power supply circuit (4, 4'), said inertial device (5) being suitable for converting electrical energy coming from said second power supply circuit (4, 4') into mechanical energy, and for converting said mechanical energy into electrical energy for said second power supply circuit (4, 4').

3. An engine according to claim 1 or claim 2, wherein said power supply circuit (4, 4') comprises:
· a DC power supply bus (10, 10') connected to said electricity source;
· a first rectifier/inverter (11, 11') connected firstly to said power supply bus (10, 10') and secondly to said electric actuator (3); and
· a second rectifier/inverter (12, 12') connected firstly to said power supply bus (10, 10') and secondly to said inertial device (5).

4. An engine according to claim 3, wherein the actuator device further includes a control device (13, 13') suitable for controlling said inertial device (5) as a function of a difference between the voltage (V2) delivered by the electricity source and the voltage (V10) of the power supply bus.

5. An engine according to claim 4, wherein said inertial device (5) includes a rotary member, said control device being suitable for controlling said inertial device as a function of a difference between a speed of rotation (W) of said rotary member and a setpoint speed (Wmoy).

6. An engine according to claim 4 or claim 5, wherein the control device (13, 13') is suitable for determining a torque setpoint (T), said control device including a torque limiter (26, 27).

7. An engine according to any one of claims 1 to 6, wherein said inertial device (5) includes an electric motor having an internal rotor.

8. An engine according to any one of claims 1 to 6, wherein said inertial device (5) includes an electric motor having an external rotor.

9. An engine according to claim 7 or claim 8, wherein the electric motor includes a flywheel.
